# EUROPEAN PATENT SPECIFICATION

(11) **EP 2 505 350 B1**
(45) Date of publication and mention of the grant of the patent: **08.07.2015**
(21) Application number: 11160538.2
(22) Date of filing: 30.03.2011
(51) Int. Cl.: B32B 5/18, B32B 3/24, B32B 3/30, B32B 3/22, B32B 27/04, B32B 3/12, B32B 1/08, B32B 5/26, B32B 5/28

(54) **Tubular Structure for Carrying Mechanical Loads and Method for Manufacturing a Tubular Structure for Carrying Mechanical Loads**
Rohrförmige Struktur zum Tragen von mechanischen Lasten und Herstellungsverfahren einer rohrförmigen Struktur zum Tragen von mechanischen Lasten
Structure de type tube pour le transport de charges mécaniques et procédé de fabrication d'une structure de type tube pour le transport de charges mécaniques

(43) Date of publication of application: 03.10.2012
(73) Proprietor: 3D | Core GmbH & Co. KG, 32051 Herford (DE)
(72) Inventor: Streuber, Fritz Michael, 5020, Salzburg (AT)
(74) Representative: Schwabe - Sandmair - Marx

(56) References cited:
- WO-A1-2009/059642
- US-A- 3 830 899

## Description

The invention relates to a tubular structure for carrying bending, compression or other mechanical loads or for feeding fluids or flowable solid particles like powder or granules and a method for manufacturing such a tubular structure. The tubular structure can in particular be a mast of a watercraft e. g. a sail boat, or a beam, girder, strut, rib, stringer, pillar and the like of a building or a vehicle including boats, ships, aircraft and land vehicles, or constitute only a longitudinal portion of such a structure. The invention relates to the structure as such and also to its use as or part of a mast, beam, girder, strut, rib, stringer, pillar and the like load carrying structures, or a pressure vessel or feeding tube.

Tubular structures are used for carrying mechanical loads in various constructions e. g. as pillars, struts, girders and the like in automobile bodies, in hulls of air- and watercraft, and also in buildings. Further examples to which the invention is directed are masts of sail ships or slender masts in general. The structures are commonly manufactured of steel or light metal alloys at high price and considerable weight. Corrosion is also a problem of metallic constructions.

US 3 830 899 A discloses a tubular composite structure and process for the manufacture of the same. In the process an inner plastics material layer is formed onto a rotatably mounted mandrel, a continuous intermediate layer of an expanded plastics material is deposited onto the inner layer, part of the continuous layer is removed so as to form at least one continuous helical groove of predetermined pitch in the intermediate layer, the helical groove is filled with a thermosetting plastics material to form a helical load bearing connecting member, an outer plastics material layer is formed over the intermediate layer, and the thermosetting plastics material is polymerized to bond the inner and outer layers to the load bearing connecting member. The layers are formed by spraying, and the at least one helical groove is formed by sawing through the intermediate layer before depositing the thermosetting plastic material and the outer layer. In an alternative process a continuous ribbon of an expanded plastics material is wound helically around the first layer to form the helical load bearing connecting member.

It is an object of the invention to provide a tubular structure for carrying mechanical loads, for example bending loads, at lower weight or improved mechanical properties like increased bending resistance.

According to the invention the tubular structure is composed of at least three layers laminated together by means of a joiner which connects the layers in a tubular composite structure with a central longitudinal line. The composite structure includes an inner or first covering layer, an outer or second covering layer, and a reinforcing layer which is arranged, with respect to the longitudinal line, radially between the two covering layers. This intermediate reinforcing layer is a sheet-like cellular base material bend around the central longitudinal line. It comprises passages which are distributed over the cellular base material and sub-divide the base material into a plurality of material cells. The material cells are delineated from each other by the passages and interconnected by bridges which remain between adjacent passages. The joiner permeates the reinforcing layer in the region of the passages and connects the covering layers to each other in a material connection or a force connection, including also a combination of both types of a connection. The joiner can for example be an adhesive or synthetic thermoplastic or thermoset resin. The joiner fills the void space between the first and the second layer. The reinforcing layer is of a lower specific weight than the joiner due to its cellular base material. It spaces the covering layers from one another, and occupies most of the space between the covering layers resulting in low weight and high resistance of the tubular composite structure in particular against bending.

The composite structure can constitute all or only a longitudinal portion of a mast, girder, strut, rib, stringer, pillar or beam of a watercraft e. g. of a sailing boat or ship, or a girder, strut, rib, stringer, pillar or beam of an automobile or truck, an aircraft or of a building. The beam, rib, stringer, girder or strut can in particular be a component of a bottom, hull, platform, floor pan or understructure of a vehicle including land vehicles like automobiles and trucks and also watercraft, e.g. sail boots, or of an aircraft fuselage or wing. It can serve as a beam, rib, stringer, girder or strut of a skeleton of a roof, in particular of a glass roof or a roof of some other transparent or translucent material. The tubular structures of the invention can carry transparent or translucent elements of the roof or frame such elements. Pressure vessels and tubes for carrying or feeding gaseous, liquid or flowable particulate media in various applications are further expedient subjects of the invention.

The composite structure can be straight or curved either over its entire length or only over a part of its length which is measured along the central longitudinal line. It can have a constant cross-section over its entire length or only over a part of its length, i.e. its cross-section can vary over its length. The cross-section can advantageously be annular e.g. a circular, elliptic or otherwise oval ring or a ring with one or more flats. The local cross-sections can be round all over the respective circumference, or polygonal including cross-sectional shapes composed of at least one round and at least one straight section. The ring can be closed, i. e. completely encompass the central longitudinal line, over the entire length of the composite structure or in only one longitudinal portion or in several portions of the composite structure, which are longitudinally spaced one from the other.

The tubular composite structure can in particular be elongated having a length measured along the central longitudinal line, which is larger than its diameter measured transverse to the central longitudinal line. In embodiments in which the diameter varies in the longitudinal direction or circumferential direction the length is larger than a largest diameter. The length of the tubular composite structure is preferably at least twice a greatest width or diameter of the tubular structure. In preferred embodiments the length is at least five or ten times larger than its diameter or greatest diameter or width. In typical embodiments the outer circumference of the tubular composite structure, when taken at any location along the central longitudinal line, fits into a square having a width of at most 50 cm, preferably at most 30 cm.

The invention is also directed to a method for manufacturing a tubular composite structure. In the method a first layer, a second layer, and a sheet-like reinforcing layer of a cellular base material are provided such that the reinforcing layer is disposed between the first layer and the second layer to form a layered structure. The reinforcing layer comprises passages which are distributed over the base material and sub-divide the base material into a plurality of material cells, the material cells being delineated from each other by the passages and interconnected by bridges which remain between adjacent passages. The first layer is provided either as a preformed tube-like body, in particular as a tube, or by wrapping it at least partially around an arbour. The sheet-like reinforcing layer is either wrapped at least partially around an outer circumferential surface of the first layer or, alternatively, the first layer and the reinforcing layer are disposed such that the reinforcing layer covers at least most of an outer surface of the first layer and both layers are wrapped together at least partially around the arbour. The second layer is wrapped at least partially around the reinforcing layer or, alternatively, the second layer and the reinforcing layer are disposed such that the reinforcing layer covers at least most of an inner surface of the second layer and both layers are wrapped together at least partially around the first layer or, as a further alternative, all three layers are disposed such that the reinforcing layer covers at least most of the first layer and at least most of the second layer. In this last alternative the flexible sheet composed at least of these three layers is wrapped at least partially around the arbour. Forming the layered composite structure in its tubular shape can accordingly be accomplished in different ways, in particular as follows:

In a first variant the first layer is provided, in a first step of the method, either as a preformed tube-like body or by wrapping it at least partially around an arbour. In a second step, the reinforcing layer is wrapped at least partially around the first layer to cover at least most, preferably all of the outer circumferential surface of the first layer. Thereafter, in a third step, the second layer is wrapped at least partially around the reinforcing layer to cover at least most, preferably all of the outer circumferential surface of the reinforcing layer.

In a second variant a layered structure including the first layer, the second layer and the reinforcing layer between the first layer and the second layer is formed as a flexible sheet-like structure and then wrapped, as a whole, at least partially around an arbour.

In a third variant the reinforcing layer and the first layer are arranged one on the other to form a flexible sheet-like layered structure and wrapped in unison at least partially around the arbour. In a fourth variant the reinforcing layer and the second layer are arranged one on the other to form a flexible sheet-like layered structure and wrapped in unison at least partially around the first layer.

Wrapping one of the layers, two of the layers or all three layers as a package at least partially around the arbour or at least partially around the respective other layer can be accomplished by wrapping the respective layer or layers in one piece or by wrapping the respective layer or layers in several portions at least partially around the arbour or the respective other layer.

In all variants a joiner is provided such that it fills the space between the first layer and the second layer including the passages through the reinforcing layer. The joiner can be filled into the composite structure after the at least three layers have been brought into the tubular shape. Instead or in addition thereto the first layer or the second layer, preferably the first layer and the second layer, can be impregnated with the joiner, e. g. by providing at least one of the covering layers as a prepreg. As a further alternative, the void space between the material cells of the reinforcing layer, in particular the passages, can be pre-filled with the joiner. In those embodiments all or part of the joiner is provided by means of the respective layer, as a part thereof. Each of these alternative provisions of a joiner can be combined with at least one of the respective other alternative provisions of a joiner.

The joiner is hardened while the layers form a tubular layered structure, thereby connecting the first layer and the second layer via the reinforcing layer in a material connection, a bonding connection, or in a force connection, including embodiments in which both types of connections exist. Once the joiner has solidified, e.g. cured, the layered structure has durably assumed its tubular shape. The joiner can be a thermoplastic or in particular a thermosetting curable or self-curing resin or an adhesive. The joiner can comprise fibres, nano tubes, hollow micro particles, micro spheres or other fillers to increase the mechanical strength of the bond or force connection and hence of the composite structure once the joiner has been hardened. The expression "hardened" or "hardening" covers any process by which the joiner is solidified or solidifies by itself from a flowable e. g. liquid or pasty state to the final solid state. Filling with and hardening of the joiner can be accomplished in particular by a RIM (Resin Injection Moulding) or RIM/RTM (Vacuum Injection Moulding) method in a forming tool enclosing the layered structure during the injection and subsequent hardening of the joiner. Hardening the joiner in a tool while exerting an outer pressure on the layered structure and optionally heating it during hardening is an advantageous option regardless of how the joiner is brought into the void space between the covering layers.

If the first layer is provided as a preformed tube-like body, e.g. a tubular body, it can be used as an arbour for wrapping the reinforcing layer or both the reinforcing layer and the second layer together at least partially around the first layer. The preformed tube-like first layer can in particular be a tube-like body of plastic optionally reinforced with glass, carbon or basalt fibres. As such it can be formed e. g. by extrusion. It can, in principal, instead be made of metal e. g. steel or a light metal alloy, although plastic materials including resin impregnated woven, non-woven and knitted fabrics already in stabilized or solidified tube-like shape are preferred.

If the first layer is wrapped around an arbour in the first step, it is provided as a flexible sheet-like material e. g. as an extruded plastic sheet flexible enough to be wrapped around the arbour. It can also be provided as one or more prepregs, i. e. one or more resin impregnated flexible fabrics including woven, non-woven and knitted fabrics. It can, in principal, instead be provided as a flexible metal sheet e. g. a steel or light metal alloy sheet, although plastic materials including prepregs are preferred.

The second layer can be provided as a flexible sheet-like material e. g. as an extruded plastic sheet flexible enough to be wrapped around the arbour. It can also be provided as one or more prepregs, i. e. one or more resin impregnated flexible fabrics including woven, non-woven and knitted fabrics. It can, in principal, instead be provided as a flexible metal sheet e. g. a steel or light metal alloy sheet, although plastic materials including prepregs are preferred.

The use of cellular reinforcing layers as core materials of layered composite structures is known e. g. from WO 98/10919 A2, EP 1 398 143 A1 and in particular from WO 2009/059642 A1. The composite structures are flat panels or flat shell parts. The use for forming walls of hulls of watercraft is mentioned.

WO 2009/059642 A1 discloses methods for manufacturing sheet-like reinforcing structures of cellular base materials comprising passages which are distributed over the base material and sub-divide the base material into a plurality of material cells, the material cells being delineated from each other by the passages and interconnected by bridges which remain between adjacent passages. WO 2009/059642 A1 discloses processes for manufacturing such cellular layers and also a cellular layer as such. The cellular layer and the processes of its manufacturing can be employed in the present invention.

For manufacturing the reinforcing layer one can start with a sheet of cellular base material into which the passages are preferably incorporated in a regular distribution, such that a correspondingly regular distribution of the material cells and structuring of the cellular base material is obtained. The material cells preferably each exhibit the same shape and size. The same preferably applies to the passages. The material cells can in particular be polygons, preferably equilateral polygons. They are preferably hexagonal in a top view onto the reinforcing structure.

When incorporating the passages in a batch operation, the base material can be provided in the form of board material which can in particular be plate-like or, in more flexible boards, also mat-like. Flexible base material can also be provided with the passages as a web product in a continuous method. The base material can exhibit a thickness of a few millimetres, for example at least 5 mm, and a thickness of up to a few centimetres, preferably at most 20 mm. The cellular material can have a predominantly open porosity, or more preferably a closed porosity, in order to prevent water or even moisture from entering.

A foamed plastic material is used as the cellular base material, wherein foamed thermoplasts or also foamed thermosets can in particular be used. Advantageous plastic foam materials are thus for example polyethylene terephthalate (PET) foams or polystyrene (PS) foams, as well as more flexible polyethylene (PE) foams or polypropylene (PP) foams or also, as an example of a thermosetting material, polyurethane (PUR) foams. The plastic foam material can be reinforced, i.e. can comprise reinforcing structures embedded in the foam material, or can be used with no reinforcement. The base material is preferably extruded and simultaneously foamed.

In preferred embodiment, the passages are incorporated into the base material by means of cutting or sawing. The word "or" is used here, as elsewhere in accordance with the invention, always in its usual logical sense of "inclusive or", i.e. it includes the meaning of "either ... or" and also the meaning of "and", providing the respective context does not rule out any of these meanings. Accordingly, the passages can be incorporated solely by cutting or solely by sawing or by a multi-stage process which includes cutting and sawing and may consist of cutting and sawing. A piercing process can be included. Piercing can precede cutting or sawing.

In a preferred multi-stage incorporating process, the first stage involves cutting in accordance with the shape of the passages, or piercing, and after the cutting or piercing process, which itself can comprise one or more stages, sawing in accordance with the shape of the passages.

The passages are cavities extending from the upper to the lower side of the reinforcing structure. Passages extending through the structure are advantageous with regard to three-dimensional deformability. When manufacturing the composite structure, the reinforcing layer serving also as a reinforcing structure can be penetrated in the region of the passages by a free-flowing joiner, in order to connect the covering layers of the composite to each other through the reinforcing layer in a material connection or a force connection, including also a combination of both.

After the passages have been incorporated, material webs or bridges remain which connect the material cells to each other. After cutting or sawing - preferably, after the final cutting or sawing step - these connecting bridges are compressed, thus permanently reducing their cross-section. The cellular base material is compacted in the region of the bridges. The bridges advantageously fall short of an upper side and lower side of the reinforcing or reinforcing layer, such that when the reinforcing layer is embedded between the covering layers the bridges do not touch the covering layers. Compacting the bridges by compression is an inexpensive way of making the bridges short of the upper and lower side of the reinforcing structure. When the reinforcing layer is embedded between the covering layers of the composite structure to be manufactured, and the passages are shaped as passages in the reinforcing or reinforcing layer, the passages form a channel system between the covering layers which extends continuously over the entire area of the reinforcing layer and can accordingly be penetrated by the joiner parallel to the sheet-like reinforcing layer, such that the reinforcing layer is in particular suitable for being filled with joiner by vacuum injection, wherein the joiner can be injected from the side. On the other hand, however, the composite structure can also be manufactured by placing the reinforcing layer onto one of the covering layers, filling the passages with the joiner, and placing the other of the covering layers onto the reinforcing layer. Further alternatives of how to provide the joiner have been explained above, e.g. provision in a prepreg.

In preferred embodiments, the material cells are compacted near the surface, and thus can optionally be rounded on an upper side or a lower side, along at least a part of their edges formed by incorporating the passages. Rounding counteracts a notching effect caused by sharp edges, while on the other hand, the area of the passages on the upper side or lower side of the reinforcing structure is increased, which advantageously increases the area available to the joiner for the material connection to the covering layers or at least to one of the covering layers and thus increases the stability of the composite.

The cellular material can be compacted in the region of the bridges or the material cells can be compacted near the surface at ambient temperature, for example room temperature, or in a heated state of the cellular material. A heatable or non-heatable bridge presser for compacting the bridges or a heatable or non-heatable top presser for compacting near the surface, and as applicable for compacting only near the edges of the material cells, can be used. If the cellular material is compacted while warm, it is preferably heated to a temperature just below its melting point and compacted at this temperature. Such a compaction is also advantageous with respect to the deformability required for bending the reinforcing layer at small radii of curvature to form slender composite structures.

A preferred manufacturing method of the structure to be used as the reinforcing layer includes at least one separating process, namely cutting or sawing, and at least one compacting process, namely compacting the cellular material in the region of the bridges or along the edges of the material cells. In particularly preferred method embodiments, the passages are incorporated sequentially by piercing or cutting and then sawing, and at least the bridges are then compacted; more preferably, both cited compacting processes are performed, for example firstly compacting the bridges and then compacting at least the edges of the material cells near the surface. A preferred method therefore comprises at least three stages, more preferably at least four. Proceeding from the cellular base material, the reinforcing structure is preferably manufactured only by piercing or cutting or sawing and additionally at least one of the two compacting processes.

For incorporating the passages, it is advantageous if multiple piercing needles or cutting knives or saw blades are arranged on a piercing tool or a cutting tool or sawing tool, facing an upper side of the base material, and are moved, for example pushed, into or preferably through the base material by a movement of the tool towards a lower side of the base material. The term "upper side of the base material" here is merely intended to indicate the side of the base material facing the piercing needles or cutting knives or saw blades, and is not intended to state whether the separating tool is arranged vertically above or below the base material, wherein the base material can also be processed in a vertical orientation, with the separating tool then arranged alongside it. If the base material consists of boards, it expediently lies on a support, and the piercing needles, cutting knives or saw blades are pushed from top to bottom into or preferably through the base material.

The piercing needles or cutting knives or saw blades are preferably arranged together in groups, wherein the piercing needles or cutting knives or saw blades of each group respectively produce a hole or passage which - as seen in a top view - is framed by the adjacent material cells and bridges. Within each of the groups, the cutting knives or saw blades of the respective group are arranged close to each other in accordance with the shape of the material cells and attenuations, respectively. For producing hexagonal material cells, each of the groups consists of three cutting knives or saw blades which, within each group, are arranged close to each other in accordance with the angles of the hexagons. In the case of for example square or rhombic material cells, the individual groups would be formed by cutting knives or saw blades arranged crosswise or in the shape of an "X" with respect to each other. In the case of the preferred hexagons, the cutting knives or saw blades of each group are in a Y-shape with respect to each other, in cross-section; in the case of the particularly preferred equilateral hexagons, they are each at an angle of 120° to each other. The cutting knives or saw blades of the individual groups each cut or saw one limb of the passages. Instead of arranging separately produced cutting knives or saw blades into groups of cutting knives or saw blades, the groups can each be formed in one piece.

Preferably, the piercing needles or cutting knives or saw blades are moved, expediently pushed, into or through the base material at least substantially vertically with respect to the surface forming the upper side of the base material; the pushing direction is preferably exactly orthogonal to the surface in question.

In preferred embodiments, the piercing needles, cutting knives or saw blades are only moved in a single plane when piercing or cutting or sawing, wherein the piercing or cutting or sawing movement is a linear movement in preferred embodiments. The saw blades preferably each exhibit a thickness which corresponds to the width of the passages. If groups are formed, as is preferred, then the saw blades of each group form a cross-section which corresponds to the cross-section of the passages. In such embodiments, the saw blades saw into or preferably through the base material by means of a linear movement or a movement in one plane only, i.e. they are not moved transverse to their pushing direction relative to the base material, in order to produce the passages. Incorporating the passages by means of simply moving the cutting knives or saw blades reciprocally in this way expedites the cutting or sawing process. In preferred embodiments, the cutting knives or saw blades comprise a cutting edge or row of saw teeth which is inclined with respect to the pushing direction. The cutting edge or row of saw teeth preferably extends up to a tip of each cutting knife or saw blade which protrudes in the pushing direction. The cutting or sawing process can thus involve stabbing and then, while moving the cutting knife or sawing blade in the pushing direction, a cutting or sawing engagement with the base material which continues transverse to the pushing direction in the base material.

When cutting or sawing in batches, the separating tool preferably performs a reciprocal stroke movement composed of the pushing movement into and preferably through the cellular material and the reverse movement.

If the base material is sufficiently flexible that it can be wound onto a reel even without the passages, then incorporating the passages is possible in a continuous method. Such materials, for example PE or PP foams, are unwound in a continuous method embodiment from a reel and guided through a roller gap formed by two rollers rotating opposite to each other or at least by one roller together with a counter-pressure means which is fixed as applicable. The passages are incorporated in the gap. The roller or more preferably at least one roller of the pair of rollers forming the gap is fitted with the piercing needles or cutting knives or saw blades. The rollers or the roller and its counter-pressure means which is formed differently co-operate as a male and female mould. In preferred method embodiments, the web is successively guided through multiple gaps, preferably through at least two gaps, wherein the male mould of one gap is fitted with cutting knives and the female mould of the at least one other gap is fitted with saw blades.

If the separating process involves at least one of a piercing and a cutting process and then at least one sawing process, the base material is preferably fed automatically to the piercing or cutting tool and then to the sawing tool, in a batch operation for example by means of a conveyor belt or other form of continuous conveying means, and in a continuous process as a web product which is conveyed through roller gaps arranged sequentially in the conveying direction. Piercing before sawing is a preferred option. Piercing and sawing can be performed by separate tools, namely a piercing tool and a sawing tool, or by a piercing and sawing tool comprising one or more saw blades with piercing needles forming the tip of the respective saw blade, the piercing needle protruding from the saw blade.

The composite structure in sandwich construction can also comprise at least one additional covering layer and at least one additional reinforcing layer, and can in particular be manufactured in a multiple sandwich construction. A double sandwich comprising three covering layers, namely an outer, a middle and another outer covering layer and two reinforcing layers respectively arranged between the outer covering layers and the middle covering layer, may serve as an example. It is also possible to arrange one or more reinforcing layers, one on top of the other, between covering layers, wherein the lower or lowermost reinforcing layer is adjacent to a lower covering layer, and the upper or uppermost reinforcing layer is adjacent to an upper covering layer.

Preferred features are also disclosed in the sub-claims and combinations of the sub-claims.

Example embodiments of the invention is explained below on the basis of figures. Features disclosed by the example embodiments, each individually and in any combination of features, advantageously develop the subjects of the claims and also the embodiments described above. There is shown:
- Figure 1: a reinforcing structure in a top view;
- Figure 2: the reinforcing structure in a cross-section;
- Figure 3: the deformed reinforcing structure in a cross-section;
- Figure 4: a cutting knife;
- Figure 4a: a group of cutting knives, in a view from below;
- Figure 5: a saw blade;
- Figure 5a: a group of saw blades, in a view from below;
- Figure 6: a bridge presser;
- Figure 7: a top presser;
- Figure 8: a composite structure of an embodiment in cross-section;
- Figure 9: the composite structure of the embodiment in a perspective view; and
- Figure 10: the composite structure of the embodiment serving as a pressure cylinder.

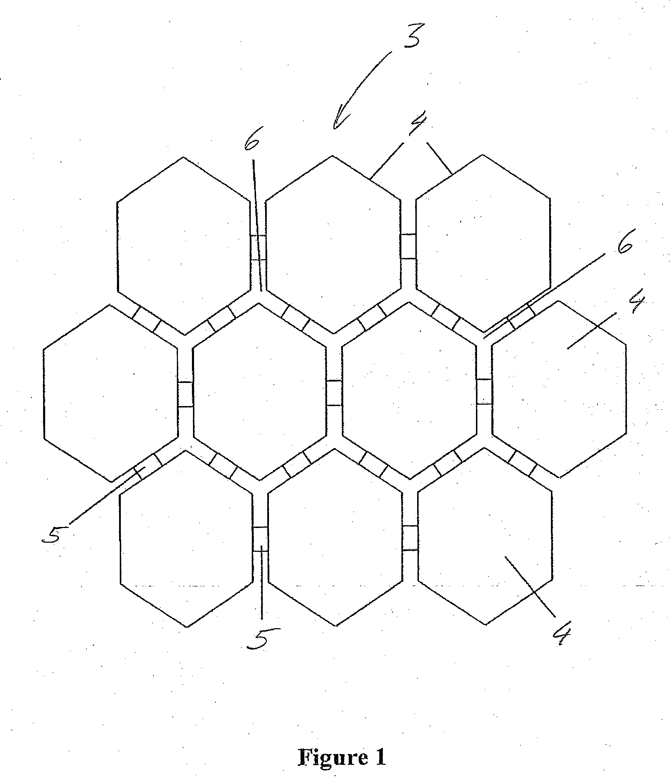

Figure 1 shows a reinforcing structure 3 made of a cellular material, namely a plastic foam material. Reinforcing elements, for example filaments, can be embedded in the cellular material, however the cellular material is preferably a non-reinforced cellular material. The reinforcing structure 3 consists of polygonal material cells 4, in the example embodiment hexagonal material cells 4, and relatively thin connecting bridges 5. The material cells 4 are connected on each of their sides to the nearest adjacent material cell 4 via a central connecting bridge 5. Due to their hexagonal shape, each of the material cells 4 is connected to its nearest adjacent material cells 4 via six connecting bridges 5. The width of the material cells 4, as measured in each direction of the plane of view, is clearly larger than the length of the connecting bridges 5. The space between the respectively nearest adjacent material cells 4 is free, apart from the connecting bridges 5. The cavities which thus remain free between the material cells 4 form passages 6 as compared to a non-structured plate-like or mat-like cellular base material. Depending on the bending resistance of the plate-like or mat-like base material, these cavities or passages 6 facilitate - or even at all enable to an appreciable extent - three-dimensional deformability. Primarily, the reinforcing structure 3 can be three-dimensionally deformed, i.e. bent about multiple axes which do not point parallel to each other, by shifting the material cells 4 relative to each other, namely by deforming the connecting bridges 5. The reinforcing structure 3 is therefore suitable as a core material for three-dimensionally curved lightweight composites in a sandwich construction. The passages 6 also in particular enable the penetration of a joiner, for example a synthetic resin or adhesive mass, by which two covering layers can be fixedly connected to each other in a material connection via the reinforcing structure 3. The joiner preferably completely fills the spaces remaining free between the material cells 4 in the region of the passages 6 and accordingly forms a honeycombed reinforcing structure for the covering layers in the hardened composite.

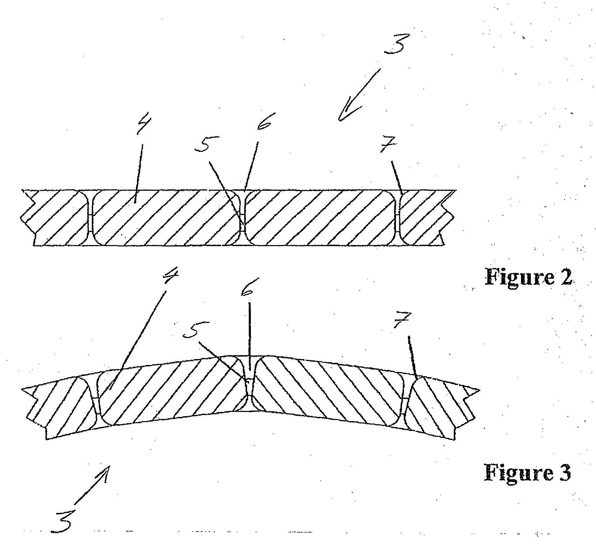

Figure 2 shows the reinforcing structure 3 in a non-deformed initial state in which the reinforcing structure 3 substantially forms a planar mat or plate structured in accordance with the shape of the material cells 4.

Figure 3 shows the reinforcing structure 3 in a deformed state in which nearest adjacent material cells 4 point at an inclined angle to each other, due to bending in the connecting bridge 5 respectively connecting them.

The reinforcing structure 3 is produced in batches from a plate-like or mat-like cellular base material, an initial board, or continuously from a web material in multiple method steps. The initial board or web product exhibits a material thickness which at least substantially corresponds to the material cells 4 throughout. It is a homogenous, non-structured board or web material which however exhibits a microscopic and as applicable also macroscopic cellular structure having a correspondingly low density. For the example embodiment, the cellular base material is a plastic foam material. Such foam materials can in particular be produced by extrusion and separated into the initial boards to be processed, or can be wound onto a reel as a web product if the base material is correspondingly flexible.

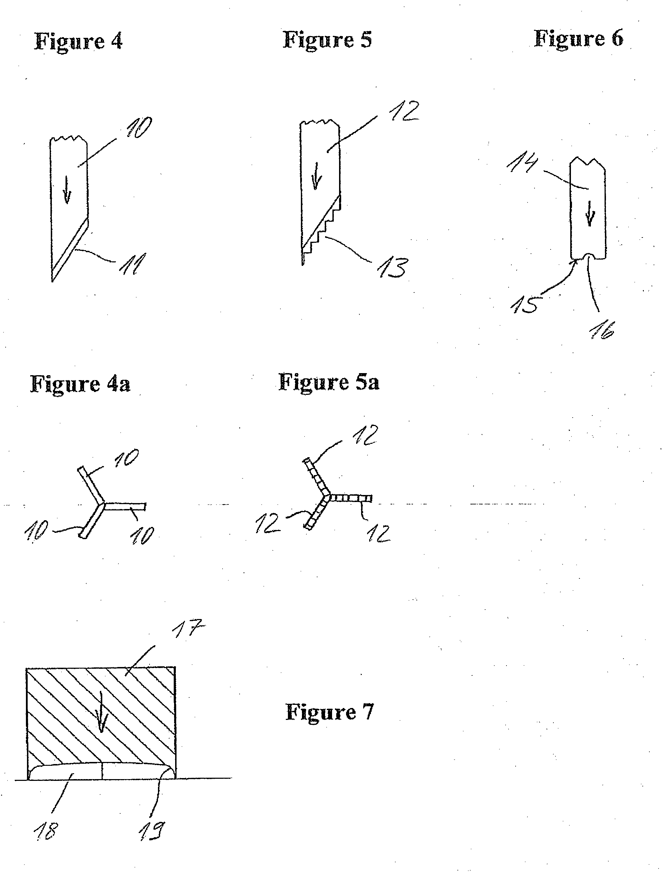

The passages 6 are incorporated into such a cellular base material in a multi-stage method by cutting or piercing, and then sawing. Once the multi-stage separating process - which involves at least one cutting or piercing process and at least one sawing process - has been completed, the connecting bridges 5 remaining between the material cells 4 and passages 6 thus obtained are compacted by compression and their cross-section thus reduced, such that the compacted bridges 5 fall short of both the upper side and the lower side of the material cells 4, as can for example be seen in Figures 5 and 6. The bridges 5 can be compacted with or without being heated. Reducing the cross-section of the bridges 5 by compression represents a method which is simple and therefore inexpensive to perform mechanically and which provides contact areas for the joiner to the respective covering layer of the composite in the region of the passages 6.

Before the bridges 5 are compacted or more preferably after the bridges 5 have been compacted, or as applicable at the same time as the bridges 5 are compacted, the material cells 4 can also be compacted by means of compression in a near-surface range of depth on each of the upper side and lower side, in order to round the edges of the material cells 4 which are still sharp-edged after the separating process. In Figures 1 to 3, the already rounded edges are provided with the reference sign 7. The material cells 4 can also either be heated at least in their near-surface range of depth to support compacting this material, or can also be compacted at ambient temperature, by means of pressure only. On the one hand, rounding the edges 7 prevents notching effects and on the other hand advantageously increases the contact area available to the joiner to the covering layer of the composite situated on the respective upper or lower side of the reinforcing structure 3.

Figures 4 and 5 respectively show a cutting knife 10 and a saw blade 12 in a lateral view. For incorporating the passages 6, a plurality of cutting knives 10 are arranged on a cutting tool and an equal plurality of saw blades 12 are arranged on a sawing tool. The cutting tool can for example be formed by a cutting beam on which the cutting knives 10 are arranged, projecting from the cutting beam towards the base material to be processed. The sawing tool can similarly comprise such a sawing beam for the saw blades 12 which are arranged on the sawing beam, projecting towards the base material. The cutting knives 10 and the saw blades 12 are arranged on the respective tool in groups of three, each consisting of three cutting knives 10 or saw blades 12 which point in a Y-shape with respect to each other, as shown in the views from below in Figures 4a and 5a. The respective tool can be moved back and forth in a pushing direction which is indicated on the cutting knife 10 and saw blade 12 by a directional arrow, such that in the respective stroke movement, the cutting knives 10 of the cutting tool or saw blades 12 of the sawing tool are pushed towards and through the base material in the pushing direction. The cutting knives 10 each comprise a tip protruding in the pushing direction and, inclined from this with respect to the pushing direction - in the example embodiment, inclined at a constant angle of inclination - a cutting edge 11 comparable to a guillotine, such that the cutting knives 10 stab into the base material with their tip first and then continue to cut through along the respective cutting edge 11, in order to obtain an even cut.

The sawing process is performed after optional cutting or piercing, wherein the saw blades 12 are positioned exactly opposite the incorporated cuts or holes and then moved in the plotted pushing direction relative to the initial material provided with the cuts. The saw blades 12 are moved forwards along the cuts or holes. They likewise comprise a tip at their protruding ends in the pushing direction, comparable to the cutting knives 10, from which a row of saw teeth 13 inclined with respect to the pushing direction tapers off counter to the pushing direction, comparable to the cutting edge 11. As a first approximation, the effect of the saw blades 12 is comparable to a jig or sabre saw, however due to the inclined row of saw teeth 13, a force acting in the pushing direction is sufficient in order to widen the previously produced cut or hole by a sawing process continuing from the respective tip of the saw blade towards a respectively nearest adjacent connecting bridge 5 or continuing away from a respectively nearest adjacent connecting bridge 5. During sawing, the passage 6 is widened in accordance with the thickness of the saw blades 12, in particular the thickness of the rows of saw teeth 13.

The cutting knives 10 exhibit a width of preferably at least 600 µm and preferably at most 1600 µm. The saw blades 12 preferably exhibit a larger width of preferably at least 700 µm and preferably at most 5 mm.

Figure 6 illustrates a bridge presser 14 using which one of the bridges 5 can be compressed and thus compacted after having formed the passages 6 by at least one of cutting and sawing, such that the cross-section of the bridge 5 in question is permanently reduced. On a lower side 15, via which it presses against the bridge 5 during compression, the bridge presser 14 comprises a recess 16. The recess 16 is semi-cylindrical - in the example embodiment, semicircular cylindrical - and extends over the entire lower side 15. The compacted bridge 5 comes to rest in the recess 16 at the end of the compacting stroke. The bridges 5 are each compressed by means of two bridge pressers 14, one of which faces and opposes the upper side of the reinforcing structure 3 and the other of which faces and opposes the lower side of the reinforcing structure 3. The bridge pressers 14 are moved towards each other in pairs - as applicable, one of the bridge pressers 14 can remain at rest while only the other one is moved - until the bridge 5 in question has been compacted to the desired final shape. The movement direction of the bridge presser 14 is indicated by a directional arrow. In a preferred embodiment, bridge pressers 14 project from a forming tool in a number and arrangement which corresponds to the number and arrangement of the bridges 5 to be compacted. Another such forming tool is arranged facing the other side of the reinforcing pre-structure produced by cutting and sawing. The bridge pressers 14 each exhibit a thickness which at least substantially corresponds to the length of the bridges 5.

Figure 7 shows a top presser 17 by means of which one of the material cells 4 is compacted on its upper side or lower side by compression, wherein the material cell 4 is primarily compacted along the edges 7 obtained by the separating process, preferably sawing, wherein the edge 7 in question is primarily rounded. The top presser 17 comprises a hollow space 18 on its lower side facing the reinforcing structure 3. The hollow space 18 is trough-shaped. During compression, it accommodates the upper or lower side of one of the material cells 4. At its circumferential edge, the hollow space 18 tapers out in a curve, the shape of which corresponds to the desired curve for the edges 7 of the material cells 4. A forming tool is arranged facing each of the upper side and lower side of the reinforcing structure 3 and is provided with a number of top pressers 17 corresponding to the number and shape of the material cells 4. In this forming step, the material cells 4 are compressed between the top pressers 17 of the two tools and thus compacted near the surface, at least in the region of the edges 7.

The reinforcing structure 3 can be produced from an initial board made of the cellular base material in a batch process as follows:
As already mentioned, the cutting knives 10 or piercing needles are arranged on the cutting tool or a piercing tool along a support of the tool in groups of three cutting knives 10 or needles each, wherein the cutting knives 10 of each group of three are arranged in a Y-shape with respect to each other, the needles accordingly in a triangle. The saw blades 12 are correspondingly arranged along a support of the sawing tool. Initial boards of the cellular material are conveyed through successively and in steps, below the cutting tool and the sawing tool. In each stroke movement of the cutting tool, the cutting knives 10 or needles produce one cut or hole in the region of the passages 6 to be provided. The cut regions or holes are then sawn out by means of a stroke movement of the sawing tool and the saw blades 12 projecting from it.

The boards respectively provided after these processes as reinforcing pre-structures are conveyed to the forming tool comprising the bridge pressers 14, where the bridges 5 are compacted. In the final step, the edges 7 of the material cells 4 are rounded by means of another forming tool bearing a plurality of top pressers 17. In a variant, the order of the two compacting operations can be reversed. It is also possible to compact the bridges 5 and round the edges 7 of the material cells 4 at the same location, and as applicable at the same time. In such embodiments, a combined forming tool comprises both the bridge pressers 14 and the top pressers 17, wherein the bridge pressers 14 can be moved in the compressing direction relative to the top pressers 17. The bridges 5 and material cells 4 can be compacted while cold, at ambient temperature. In a further development, the bridge pressers 14 are tempered to a temperature slightly below the melting point of the cellular base material. In another further development, the top pressers 17 are tempered to such a temperature. It is also possible to correspondingly temper the bridge pressers 14 and the top pressers 17.

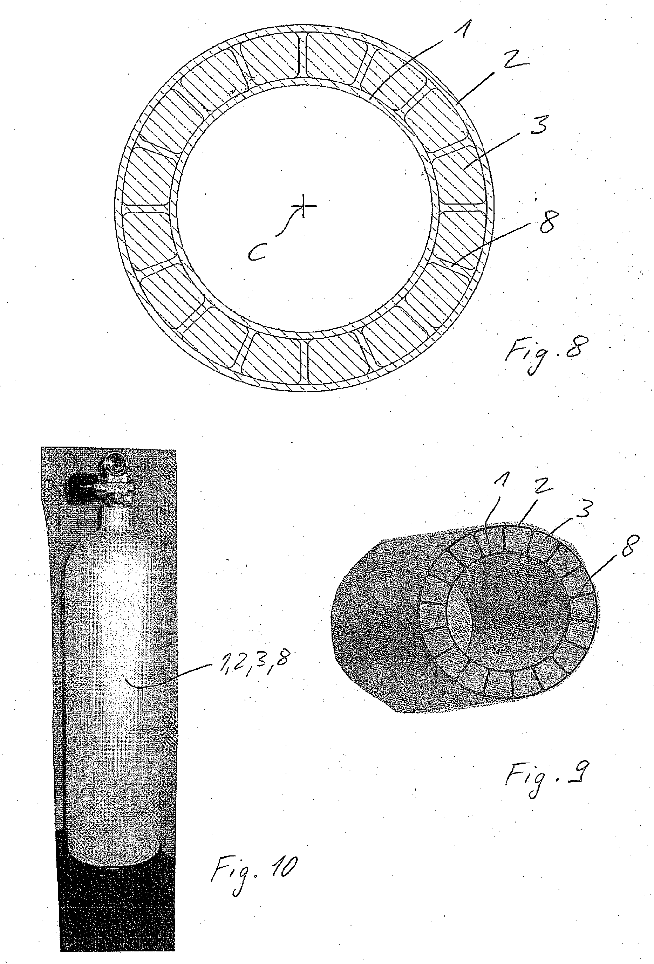

Figure 8 shows a cross-section of a composite structure of an embodiment. The composite structure is tubular. It comprises an inner or first covering layer 1 and an outer or second covering layer 2, each consisting e.g. of a plastic material preferably with embedded reinforcing elements like glass or carbon fibres. The reinforcing structure 3 is sandwiched between the covering layers 1 and 2, it is an embedded reinforcing layer 3. Its passages 6 are filled with a joiner 8, preferably a hardened resin. The joiner 8 conforms to the honeycombed structure of the material cells 4 and fills the former passages 6 and all void space between the covering layers 1 and 2 left by the reinforcing layer 3. The composite structure has an annular cross-section over all or at least most of its length. The layers 1, 2 and 3 are annular over at least most of the total length of the composite structure. A central longitudinal line C of the composite structure may be curved, kinked, or simply straight depending on the run of the composite structure in the longitudinal direction.

Figure 9 shows an axial portion of the tubular composite structure of the embodiment in a perspective view. The composite structure is formed as a cylinder, at least in the axial portion shown. The tubular composite structure can in particular be formed as a cylinder all over its length, in the example embodiment as a cylinder with a circular inner and a circular outer circumference which are concentric to one another.

The covering layers 1 and 2 are both considerably thinner than the reinforcing layer 3. The outer diameter of the composite structure is preferably below 50 cm all over its length, and can be lower than 30 cm, all over the length of the composite structure, while the axial length can be well above 1 m. The thickness of the layers 1, 2 and 3 in unison is preferably less than half the inner diameter or a maximum inner diameter of the composite structure when measured in the respective cross-section. The layers 1, 2 and 3 can have any ring shape instead of being circular, e.g. they can be shaped to form an elliptic or otherwise oval or a polygonal ring. Circular or oval ring forms are however preferred, in particular if the tubular composite structure is serving as a pressure vessel or as a mast or longitudinal portion of a mast of a sail boat or ship, only to name preferred applications of the composite structure.

Figure 10 shows a pressure cylinder which comprises the tubular composite structure of the embodiment. The tubular structure, i.e. the sandwiched layers 1, 2 and 3 together with the joiner 8, constitutes at least the cylindrical portion of the pressure cylinder and can also form, in one piece, a neck of the cylinder. A bottom of the cylinder can also be formed together with the cylindrical portion, in the same shaping process of the layers 1, 2 and 3 and in particular in the same hardening process when hardening the joiner 8 which fills any void space between the first layer 1 and the second layer 2 which is left by the reinforcing layer 3.

In a method of manufacturing, the first layer 1 can be provided as a preformed tubular or at least tube-like structure, for example a cylindrical tube, e.g. of plastic containing embedded reinforcing elements like fibres. A flexible board of reinforcing structure 3 is wrapped around the outer surface of the first layer 1 to form the intermediate reinforcing layer 3. Thereafter, the outer layer 2 is wrapped around the outer surface of the reinforcing layer 3. Alternatively, the layers 2 and 3 can be pre-fixed one to the other and wrapped around the inner layer 1 as a package. The preformed inner layer 1 serves as an arbour to wrap the other layers 3 and 2 around. The layered package can then be placed or is already placed in a tool for filling any void space between the covering layers 1 and 2 with the joiner 8. For filling the layered package 1-3 can be evacuated. The joiner 8 is hardened either by self-curing or thermal treatment depending on the nature of the joiner 8. The tool may exert an even pressure over the entire circumferential outer surface of the composite structure until the joiner 8 is hardened.

Instead of filling the layer package 1-3 with the joiner 8, the joiner 8 can be provided, in all embodiments, as part of one or more of the layers 1, 2 and 3. The first layer 1 or the second layer 2 can be provided as a prepreg, i.e. a resin impregnated fabric. Instead or additionally, the reinforcing structure 3 which is the reinforcing intermediate layer 3 of the tubular composite structure can contain the joiner 8 or part of the joiner 8 needed for filling the void space between the covering layers 1 and 2 in the cavities between the material cells 4. The surface of the material cells 4 can optionally also be covered by a thin layer of the joiner 8

### Reference signs

- 1: first layer
- 2: second layer
- 3: reinforcing layer
- 4: material cell
- 5: bridge
- 6: passage
- 7: edge
- 8: joiner
- 10: cutting knife
- 11: cutting edge
- 12: saw
- 13: row of saw teeth
- 14: bridge presser
- 15: lower side of bridge presser
- 16: recess in bridge presser
- 17: top presser
- 18: hollow space
- 19: circumferential edge

## Claims

1. A tubular composite structure, including:
a) a first layer (1) and a second layer (2),
b) a reinforcing layer (3) of a sheet-like cellular base material, namely a foamed plastic material, arranged between the first and second layers (1, 2),
c) the reinforcing layer (3) comprising passages (6) which are distributed over the base material,
d) and a joiner (8) which connects the covering layers to each other in a material connection or a force connection, and permeates the reinforcing layer (3) in the region of the passages (6),
**characterised in that**
e) the passages (6) sub-divide the base material into a plurality of material cells (4), the material cells (4) being delineated from each other by the passages (6) and interconnected by bridges (5) which remain between adjacent passages (6),
f) and the joiner (8) encloses at least the sides of the material cells (4) of the reinforcing layer (3).

2. The composite structure according to the preceding claim, wherein the composite structure is a tubular load carrying structure or axial portion of a tubular load carrying structure like a mast, girder, strut, stringer, rib, pillar or beam of a boat, ship, aircraft, car or other vehicle or of a building e.g. of a skeleton of a roof, or is a pressure vessel or feeding tube or a major hollow part of a pressure vessel or a feeding tube.

3. The composite structure according to any one of the preceding claims, wherein the length of the tubular composite structure is at least twice, preferably at least five times, the greatest width of the tubular composite structure.

4. The composite structure according to any one of the preceding claims, wherein the outer circumference of the tubular composite structure fits into a square having a width of at most 50 cm, preferably at most 30 cm.

5. The composite structure according to any one of the preceding claims, wherein the joiner (8) is filled with reinforcing particles, preferably with at least one of glass fibres, carbon fibres, basalt fibres, nano particles and hollow micro particles.

6. A method for manufacturing a tubular composite structure, including the steps of
(a) providing a first layer (1) either as a preformed tube-like body or by wrapping it at least partially around an arbour,
(b) wrapping a sheet-like reinforcing layer (3) of a cellular base material, namely a foamed plastic material, at least partially around an outer surface of the first layer (1), or covering at least most of an outer surface of the first layer (1) with the reinforcing layer (3) and wrapping both layers (2, 3) in step (a) at least partially around the arbour,
(c) wrapping a second layer (2) at least partially around the reinforcing layer (3), or covering at least most of an outer surface of the reinforcing layer (3) with the second layer (2) and wrapping the reinforcing layer (3) together with the second layer (2) in step (b) at least partially around the first layer (1) or together with the first layer (1) and the second layer (2) in step (a) at least partially around the arbour,
(d) the reinforcing layer (3) comprising passages (6) which are distributed over the base material and sub-divide the base material into a plurality of material cells (4), the material cells (4) being delineated from each other by the passages (6) and interconnected by bridges (5) which remain between adjacent passages (6),
(e) providing a joiner (8) which fills the space between the first layer (1) and the second layer (2) including the passages (6) through the reinforcing layer (3),
(f) and hardening the joiner (8) while the layers (1, 2, 3) form a tubular layered structure (1, 2, 3) to connect the first layer (1) to the second layer (2) via the reinforcing layer (3) in a material connection or a force connection.

7. The method according to the preceding claim, wherein the reinforcing layer (3) is wrapped in step (b) at least partially around the first layer (1) and the second layer (2) is wrapped in step (c) at least partially around the reinforcing layer (3).

8. The method according to any one of the preceding claims, wherein the first layer (1) or the second layer (2) is provided as a prepreg.

9. The method according to any one of the preceding claims, wherein the passages (6) of the reinforcing layer (3) are filled with the joiner (8) before wrapping it at least partially around the arbour or the first layer (1), preferably before performing step (b) or step (c).

10. The method according to any one of the preceding claims, wherein the passages (6) are incorporated into the sheet-like cellular base material of the reinforcing layer (3), distributed over an area of the base material, by means of separating like piercing or cutting or sawing, preferably by at least one of piercing and cutting, and then sawing.

11. The method according to the preceding claim, wherein a cross-sectional area of the bridges (5) is reduced by means of compression, preferably by heating and compressing the heated bridges (5).

12. The method according to any one of the preceding claims, wherein the bridges (5) are compacted, such that they fall short of an upper side and lower side of the respectively adjacent material cells (4).

13. The method according to any one of the preceding claims, wherein the material cells (4) are compacted near the surface and thus rounded on an upper side or a lower side, along at least a part of edges (7) formed by incorporating the passages (6), wherein the material cells (4) are optionally heated at least in the region of the edges (7) to be rounded, and are compacted near the surface along the optionally heated edges (7).

14. The method according to any one of the preceding claims, wherein reinforcing structures are embedded in the cellular base material.

## Patentansprüche

1. Röhrenförmige Verbundstruktur, enthaltend:
a) eine erste Schicht (1) und eine zweite Schicht (2),
b) eine Verstärkungsschicht (3) aus einem plattenartigen zellularen Basismaterial, nämlich einem geschäumten Plastikmaterial, das zwischen der ersten und zweiten Schicht (1, 2) angeordnet ist,
c) wobei die Verstärkungsschicht (3) Durchgänge (6) enthält, die über das Basismaterial verteilt sind,
d) und einen Verbinder (8), der die Deckschichten miteinander mit einer Materialverbindung bzw. einem Stoffschluss oder einem Kraftschluss verbindet und die Verstärkungsschicht (3) in der Region der Durchgänge (6) durchdringt,
**dadurch gekennzeichnet, dass**
e) die Durchgänge (6) das Basismaterial in eine Mehrzahl von Materialzellen (4) unterteilen, wobei die Materialzellen (4) voneinander durch die Durchgänge (6) abgegrenzt und durch Brücken (5), die zwischen benachbarten Durchgängen (6) verbleiben, untereinander verbunden werden,
f) und der Verbinder (8) wenigstens die Seiten der Materialzellen (4) der Verstärkungsschicht (3) umschließt.

2. Verbundstruktur gemäß dem vorhergehenden Anspruch, bei der die Verbundstruktur eine röhrenförmige lasttragende Struktur oder ein axialer Abschnitt einer röhrenförmigen lasttragenden Struktur wie eines Masts, Balkens bzw. Trägers, einer Strebe, eines Längsträgers, einer Rippe, eines Pfeilers bzw. Holms oder Balkens eines Boots, Schiffs, Luftfahrzeugs, Autos oder anderen Fahrzeugs oder eines Gebäudes, z.B. eines Dachskeletts ist, oder in einem Druckgefäß oder Zufuhrrohr oder großen hohlen Teils eines Druckgefäßes oder ein Zufuhrrohr ist.

3. Verbundstruktur gemäß irgendeinem der vorhergehenden Ansprüche, bei der die Länge der röhrenförmigen Verbundstruktur wenigstens zweimal, bevorzugt wenigstens fünfmal, so groß ist wie die größte Breite der röhrenförmigen Verbundstruktur.

4. Verbundstruktur gemäß irgendeinem der vorhergehenden Ansprüche, bei der der Außenumfang der röhrenförmigen Verbdungstruktur in ein Quadrat mit einer Breite von höchstens 50 cm, bevorzugt höchstens 30 cm, passt.

5. Verbundstruktur gemäß irgendeinem der vorhergehenden Ansprüche, bei der der Verbinder (8) mit verstärkenden Teilchen, bevorzugt mit wenigstens einem von Glasfasern, Kohlefasern, Basaltfasern, Nanopartikeln und hohlen Mikropartikeln, gefüllt ist.

6. Verfahren zum Herstellen einer röhrenförmigen Verbundstruktur, das folgende Schritte enthält:
(a) Bereitstellen einer ersten Schicht (1) entweder als einen vorgeformten röhrenartigen Körper, oder indem sie wenigstens teilweise um eine Spindel gewickelt wird,
(b) Wickeln einer plattenartigen Verstärkungsschicht (3) aus einem zellularen Basismaterial, nämlich einem geschäumten Plastikmaterial, wenigstens teilweise um eine Außenfläche der ersten Schicht (1) oder Bedecken wenigstens des Großteils einer Außenfläche der ersten Schicht (1) mit der Verstärkungsschicht (3) und Wickeln beider Schichten (2, 3) in Schritt (a) wenigstens teilweise um die Spindel,
(c) Wickeln einer zweiten Schichten (2) wenigstens teilweise um die Verstärkungsschicht (3) oder Bedecken wenigstens des Großteils einer Außenfläche der Verstärkungsschicht (3) mit der zweiten Schicht (2) und Wickeln der Verstärkungsschicht (3) zusammen mit der zweiten Schicht (2) in Schritt (b) wenigstens teilweise um die die erste Schicht (1) oder zusammen mit der ersten Schicht (1) und der zweiten Schicht (2) in Schritt (a) wenigstens teilweise um die Spindel,
(d) wobei die Verstärkungsschicht (3) Durchgänge (6) enthält, die über das Basismaterial verteilt sind und die das Basismaterial in eine Mehrzahl von Materialzellen (4) unterteilen, wobei die Materialzellen (4) voneinander durch die Durchgänge (6) abgegrenzt und durch Brücken (5), die zwischen benachbarten Durchgängen (6) verbleiben, untereinander verbunden werden,
(e) Bereitstellen eines Verbinders (8), die den Raum zwischen der ersten Schicht (1) und der zweiten Schicht (2) füllt, der die Durchgänge (6) durch die Verstärkungsschicht (3) enthält,
(f) und Aushärten des Verbinders (8) während die Schichten (1, 2 , 3) eine röhrenförmige Schichtstruktur (1, 2, 3) bilden, um die erste Schicht (1) mit der zweiten Schicht (2) über die Verstärkungsschicht (3) in einer Materialverbindung bzw. einem Stoffschluss oder einem Kraftschluss zu verbinden.

7. Verfahren gemäß dem vorhergehenden Anspruch, bei dem die Verstärkungsschicht (3) in Schritt (b) wenigstens teilweise um die erste Schicht (1) gewickelt wird und die zweite Schicht (2) in Schritt (c) wenigstens teilweise um die Verstärkungsschicht (3) gewickelt wird.

8. Verfahren gemäß irgendeinem der vorhergehenden Ansprüche, bei dem die erste Schicht (1) oder die zweite Schicht (2) als Prepreg bereitgestellt wird.

9. Verfahren gemäß irgendeinem der vorhergehenden Ansprüche, bei dem die Durchgänge (6) der Verstärkungsschicht mit dem Verbinder (8) gefüllt werden, bevor sie wenigstens teilweise um die Spindel oder die erste Schicht (1) gewickelt wird, bevorzugt bevor Schritt (b) oder Schritt (c) durchgeführt wird.

10. Verfahren gemäß irgendeinem der vorhergehenden Ansprüche, bei dem die Durchgänge (6) in dem plattenartigen zellularen Basismaterial der Verstärkungsschicht (3) enthalten sind, über eine Fläche des Basismaterials mittels Trennmitteln wie Sondieren bzw. Durchstechen oder Schneiden oder Sägen, bevorzugt mittels wenigstens eines von Sondieren bzw. Durchstechen und Schneiden und darauf folgendem Sägen, verteilt werden.

11. Verfahren gemäß dem vorhergehenden Anspruch, bei dem eine Querschnittsfläche der Brücken (5) mittels Kompression, bevorzugt mittel Erhitzens und Komprimierens der erhitzten Brücken (5), reduziert wird.

12. Verfahren gemäß irgendeinem der vorhergehenden Ansprüche, bei dem die Brücken (5) kompaktiert werden, so dass sie eine Oberseite und eine Unterseite der jeweils benachbarten Materialzellen (4) nicht erreichen.

13. Verfahren gemäß irgendeinem der vorhergehenden Ansprüche, bei dem die Materialzellen (4) nahe der Oberfläche kompaktiert und somit auf einer Oberseite und einer Unterseite entlang wenigstens eines Teils von Kanten (7), die durch Einbauen der Durchgänge (6) gebildet werden, abgerundet werden, wobei die Materialzellen (4) optional wenigstens im Bereich der Kanten (7) erhitzt werden, um abgerundet zu werden, und nahe der Oberfläche entlang der optional erhitzten Kanten (7) kompaktiert werden.

14. Verfahren gemäß irgendeinem der vorhergehenden Ansprüche, bei dem Verstärkungsstrukturen in das zellulare Basismaterial eingebettet werden.

## Revendications

1. Structure composite tubulaire, comprenant :
a) une première couche (1) et une deuxième couche (2),
b) une couche de renforcement (3) d'un matériau de base cellulaire en forme de feuille, c'est-à-dire un matériau plastique en mousse, disposé entre les première et deuxième couches (1, 2),
c) la couche de renforcement (3) comportant des passages (6) qui sont répartis sur le matériau de base,
d) et une jointure (8) qui relie les couches de recouvrement entre elles dans une liaison de matière ou une liaison de force, et imprègne la couche de renforcement (3) dans la zone des passages (6),
**caractérisée en ce que**
e) les passages (6) subdivisent le matériau de base en une pluralité de cellules de matériau (4), les cellules de matériau (4) étant délimitées entre elles par les passages (6) et reliées entre elles par des ponts (5) qui restent entre les passages adjacents (6),
f) et la jointure (8) englobe au moins les côtés des cellules de matériau (4) de la couche de renforcement (3).

2. Structure composite selon la revendication précédente, dans laquelle la structure composite est une structure de support de charge tubulaire ou une partie axiale d'une structure de support de charge tubulaire comme un mât, une poutre de support, une entretoise, une poutre de renforcement, une nervure, un pilier ou une poutre d'un bateau , d'un navire, d'un avion, d'une voiture ou d'un autre véhicule ou d'un bâtiment par exemple d'un squelette d'un toit, ou est un récipient sous pression ou un tube d'alimentation ou une partie creuse principale d'un récipient sous pression ou d'un tube d'alimentation.

3. Structure composite selon l'une quelconque des revendications précédentes, dans laquelle la longueur de la structure composite tubulaire est au moins deux fois, de préférence au moins cinq fois, la plus grande largeur de la structure composite tubulaire.

4. Structure composite selon l'une quelconque des revendications précédentes, dans laquelle la circonférence extérieure de la structure composite tubulaire s'ajuste dans un carré ayant une largeur de 50 cm, de préférence de 30 cm au maximum.

5. Structure composite selon l'une quelconque des revendications précédentes, dans laquelle la jointure (8) est remplie de particules de renforcement, de préférence avec au moins l'une parmi des fibres de verre, des fibres de carbone, des fibres de basalte, des nanoparticules et des microparticules creuses.

6. Procédé de fabrication d'une structure composite tubulaire, comprenant les étapes consistant à :
(a) fournir une première couche (1) soit sous forme de corps semblable à un tube préformé ou en l'enveloppant au moins partiellement autour d'un arbre,
(b) enrouler une couche de renforcement de type feuille (3) d'un matériau de base cellulaire, c'est-à-dire un matériau plastique en mousse, au moins partiellement autour d'une surface extérieure de la première couche (1), ou couvrant au moins la majeure partie de la surface extérieure de la première couche (1) avec la couche de renforcement (3) et enveloppant les deux couches (2, 3) à l'étape (a) au moins partiellement autour de l'arbre,
(c) enrouler une deuxième (2) au moins partiellement autour de la couche de renforcement (3), ou couvrir au moins la majeure partie d'une surface extérieure de la couche de renforcement (3) avec la deuxième couche (2) et enrouler la couche de renforcement (3) conjointement avec la seconde couche (2) à l'étape (b) au moins partiellement autour de la première couche (1) ou conjointement avec la première couche (1) et la deuxième couche (2) à l'étape (a) au moins partiellement autour de l'arbre,
(d) la couche de renforcement (3) comportant des passages (6) qui sont répartis sur le matériau de base et subdivisent le matériau de base en une pluralité de cellules de matériau (4), les cellules de matériau (4) étant délimitées les unes par rapport aux autres par les passages (6) et reliées entre elles par des ponts (5) qui restent entre les passages adjacents (6),
(e) fournir une jointure (8) qui remplit l'espace entre la première couche (1) et la deuxième couche (2) comprenant les passages (6) à travers la couche de renforcement (3),
(f) et durcir la jointure (8), tandis que les couches (1, 2, 3) forment une structure tubulaire en couches (1, 2, 3) pour relier la première couche (1) à la deuxième couche (2) par l'intermédiaire de la couche de renforcement (3) dans une liaison de matériau ou une liaison de force.

7. Procédé selon la revendication précédente, dans lequel la couche de renforcement (3) est enroulée à l'étape (b) au moins partiellement autour de la première couche (1) et la deuxième couche (2) est enroulée à l'étape (c) au moins partiellement autour de la couche de renforcement (3).

8. Procédé selon l'une quelconque des revendications précédentes, dans lequel la première couche (1) ou la deuxième couche (2) est fournie sous forme de pré-imprégné.

9. Procédé selon l'une quelconque des revendications précédentes, dans lequel les passages (6) de la couche de renforcement (3) sont remplis avec la jointure (8) avant de l'enrouler au moins partiellement autour de l'arbre ou de la première couche (1), de préférence avant d'effectuer l'étape (b) ou l'étape (c).

10. Procédé selon l'une quelconque des revendications précédentes, dans lequel les passages (6) sont incorporés dans le matériau cellulaire en forme de feuille de la couche de renforcement (3), répartis sur une surface du matériau de base, par des moyens de séparation de type perçage, coupe ou sciage, de préférence par l'intermédiaire d'au moins un perçage et une coupe, et ensuite un sciage.

11. Procédé selon la revendication précédente, dans lequel une surface de section transversale des ponts (5) est réduite par compression, de préférence en chauffant et en comprimant les ponts chauffés (5).

12. Procédé selon l'une quelconque des revendications précédentes, dans lequel les ponts (5) sont compactés, de telle sorte qu'ils n'atteignent pas un côté supérieur et côté inférieur des cellules de matériau respectivement adjacentes (4).

13. Procédé selon l'une quelconque des revendications précédentes, dans lequel les cellules de matériau (4) sont compactées à proximité de la surface et ainsi arrondies sur un côté supérieur ou un côté inférieur, le long d'au moins une partie des bords (7) formés en incorporant les passages (6), dans lequel les cellules de matériau (4) sont chauffées de manière facultative, au moins dans la zone des bords (7) à arrondir, et sont compactées à proximité de la surface le long des bords (7) chauffés de manière facultative.

14. Procédé selon l'une quelconque des revendications précédentes, dans lequel les structures de renforcement sont incorporées dans le matériau cellulaire de base.
